# EUROPÄISCHE PATENTSCHRIFT

(11) **EP 1 945 741 B1**
(45) Veröffentlichungstag und Bekanntmachung des Hinweises auf die Patenterteilung: **14.11.2018**
(21) Anmeldenummer: 06793236.8
(22) Anmeldetag: 05.09.2006
(51) Int. Cl.: C10J 3/66, C10J 3/46, C10K 3/00

(54) **VORRICHTUNG UND VERFAHREN ZUR ENERGIEGEWINNUNG AUS BIOENERGIETRÄGERN UND ANDEREN ORGANISCHEN STOFFEN**
DEVICE AND METHOD FOR OBTAINING ENERGY FROM BIOENERGY SOURCES AND OTHER ORGANIC MATERIALS
PROCEDE ET DISPOSITIF POUR OBTENIR DE L'ENERGIE A PARTIR DE SUPPORTS BIOENERGETIQUES ET D'AUTRES MATIERES ORGANIQUES

(30) Priorität: 16.09.2005 DE 102005046347
(43) Veröffentlichungstag der Anmeldung: 23.07.2008
(73) Patentinhaber: Bioenergy Systems N.V., 5644 RA Eindhoven (NL)
(72) Erfinder: MARTIN, Harald, 06567 Bad Frankenhausen (DE)
(74) Vertreter: Rauschenbach, Marion
(86) Internationale Anmeldenummer: PCT/EP2006/066027
(87) Internationale Veröffentlichungsnummer: WO 2007/031443

(56) Entgegenhaltungen:
- WO-A-01/68789
- WO-A-97/15641
- DE-A1- 4 330 788
- DE-A1- 19 937 521
- GB-A- 2 363 388
- US-B1- 6 669 822
- US-B1- 6 669 822

## Beschreibung

Die Erfindung bezieht sich auf die Gebiete der Energiegewinnung und des Maschinenbaus und betrifft eine Vorrichtung und Verfahren zur Energiegewinnung aus Bioenergieträgern und anderen organischen Stoffen, wie sie beispielsweise zur Erzeugung von Wärme und Elektroenergie eingesetzt werden können.
Bekannt sind bereits verschiedene Verfahren zur Vergasung und Verbrennung von organischen Stoffen, sogenannten Bioenergieträgern, deren Energien thermisch, chemisch oder elektrisch genutzt werden.
Von I. Obernberger (VDI Schriftenreihe 2000 "Regenerative Energien in Ungarn und in Deutschland", Verlag GmbH (Hrsg.) Düsseldorf, Deutschland pp. 59-101) sind im Überblick die derzeit bekannten Verfahren und Vorrichtungen zur thermischen Nutzung fester biogener Brennstoffe zur Wärme- und Stromerzeugung aufgeführt.
Neben den bekannten Technologien der Verbrennung sind auch moderne Technologien der Festbettvergasung und der Wirbelschichtvergasung mit nachgeschalteten Gasmotoren oder Gasturbinen bekannt.

Die Dokumente DE 4330788 A1 und US 6669822 B1 offenbaren weiterhin eine Vorrichtung und ein Verfahren zur Energiegewinnung aus Bioenergieträgern und anderen organischen Stoffen, bestehend aus einem Pyrolysereaktor und einem weiteren Reaktor.

In einem Festbettvergaser ist der Brennstoff in einer Schüttschicht dem Vergasungsmittel ausgesetzt. Die einzelnen Brennstoffstücke bewegen sich in dieser Schüttschicht vom Beschickungsort über verschiedene Zonen der Brennstoffschüttung zum Austragungsort der Asche. Je nach Stoffflussrichtung werden Gegenstrom- oder Gleichstrom- oder Querstromvergaser, Doppelfeuerungsvergaser oder Zweistufenvergaser unterschieden.

Bei der Wirbelschichtvergasung werden die stationäre und die zirkulierende Wirbelschichtvergasung unterschieden.
In einen Wirbelschichtvergaser wird der zu vergasende feinkörnige Brennstoff (Kantenlänge soll kleiner 30 mm betragen) von unten durch einen Anströmboden vom Oxidationsmittel durchströmt. Nach Überschreiten der maximalen Fluidisierungsgeschwindigkeit des Gases bildet sich eine Wirbelschicht mit definierter Oberfläche aus. Dieser Wirbelzustand wird als stationäre Wirbelschicht bezeichnet. Oberhalb des Wirbelbettes ist eine heiße Reaktionszone vorhanden, die vom aus dem Wirbelbett freigesetzten Gasen durchströmt wird und in der das Gas weiter reagieren kann.
Wird die Gasgeschwindigkeit weiter erhöht, expandiert die Wirbelschicht, bis der Feststoff nahezu gleichmäßig über die Reaktorhöhe verteilt ist. Das von Produktgas mitgerissene Brennmaterial wird in einem nachgeschalteten Heißzyklon vom Produktgas getrennt und in den Reaktor zurückgeführt. Diese Technologie wird als zirkulierende Wirbelschicht bezeichnet.

Die Nachteile der bekannten Verfahren und Vorrichtungen zur Wirbelschichtvergasung liegen in einem relativ hohen technischen Aufwand und einem geringen Kaltgaswirkungsgrad. Weiterhin ist die Aufrechterhaltung einer stabilen Wirbelschicht nach wie vor schwierig.

Die Aufgabe der Erfindung besteht in der Angabe einer Vorrichtung und eines Verfahrens zur Energiegewinnung aus Bioenergieträgern und anderen organischen Stoffen, die stabil arbeitet und einen höheren Kaltgaswirkungsgrad als bisher bekannte Vergasungsverfahren aufweist.

Die Aufgabe wird durch die in den Ansprüchen angegebene Erfindung gelöst. Weiterbildungen sind Gegenstand der Unteransprüche.

Die erfindungsgemäße Vorrichtung zur Energiegewinnung aus Bioenergieträgern und anderen organischen Stoffen besteht aus einem Reaktor (Pyrolysereaktor), der indirekt beheizbar ausgebildet ist und an einem Ende einen Einlauf für die Bioenergieträger und anderen organischen Stoffe aufweist. Der Pyrolysereaktor ist mit einer Transporteinrichtung versehen, die im Inneren den Transport der Bioenergieträger und anderen organischen Stoffe im wesentlichen über seine gesamte Länge realisiert. Weiterhin weist der Pyrolysereaktor mindestens eine solche Länge auf, dass im Inneren vom Einlauf in Transportrichtung gesehen mindestens zuerst eine Trocknung und nachfolgend eine Pyrolyse der Bioenergieträger und anderen organischen Stoffe im wesentlichen vollständig realisiert ist. Weiterhin befindet sich mindestens ein Teil des Pyrolysereaktors, in dem die Pyrolyse abläuft, gas- und stoffdicht im Inneren eines weiteren Reaktors, der nach unten verjüngend ausgebildet ist und mindestens im Bereich seines kleinsten Querschnittes eine Zuführung für Feststoffe und Gase und/oder Gasgemische und/oder Wasserdampf aufweist. Der Pyrolysereaktor weist im Bereich der im wesentlichen abgeschlossenen Pyrolyse der Bioenergieträger und anderen organischen Stoffe eine Öffnung mit einer schachtartigen Führung nach unten auf, die den Transport der Pyrolyseprodukte in eine weitere Transporteinrichtung realisiert, wobei die weitere Transporteinrichtung den Transport der Pyrolyseprodukte zu der Zuführung des weiteren Reaktors realisiert und dort einen mindestens teilweisen Eintritt der Pyrolyseprodukte in den weiteren Reaktor realisiert. Weiterhin bestehen die Innenräume der Reaktoren, Transporteinrichtungen, Führungen und Einbauteile aus entsprechend den jeweils stattfindenden thermischen Prozessen erreichbaren Maximaltemperaturen ausgewählten temperaturbeständigen Materialien. Und weiterhin weist der weitere Reaktor mindestens eine im oberen Teil befindliche Auslassöffnung für im wesentlichen gasförmige Produkte auf, die mit Energiegewinnungsvorrichtungen verbunden ist.

Vorteilhafterweise ist der Pyrolysereaktor rohrförmig, mit rundem, ovalem, quadratischem oder rechteckigem Querschnitt ausgebildet.

Ebenfalls vorteilhafterweise ist der Pyrolysereaktor geneigt angeordnet, wobei die Neigung zwischen 10 und 40 ° betragen kann.

Auch vorteilhafterweise enthält der Pyrolysereaktor im Inneren ein Schneckenförderer.

Weiterhin vorteilhafterweise liegt der weitere Reaktor mit einem zylinderförmigen, rechteckigen, quadratischen oder ovalen Querschnitt vor und im Inneren ist ein Hohlraum ausgebildet.

Es ist von Vorteil, dass der weitere Reaktor als stehender hohlzylinderförmiger Reaktor ausgebildet ist.

Auch von Vorteil ist es, dass der verjüngende Teil des weiteren Reaktors kreiskegelstumpfförmig oder pyramidenstumpfförmig ausgebildet ist.

Von Vorteil ist auch, wenn die Zuführung für Feststoffe und Gase und/oder Gasgemische und/oder Wasserdampf kreisförmig, oval, quadratisch oder rechteckig ausgebildet ist.

Weiterhin von Vorteil ist es, dass die schachtartige Zuführung rohrförmig, mit rundem, ovalem, quadratischem oder rechteckigem Querschnitt ausgebildet ist.

Ebenfalls ist es von Vorteil, dass die Öffnung im Pyrolysereaktor klein ist gegenüber dem Durchmesser des Reaktors.

Eine weitere vorteilhafte Ausgestaltung der erfindungsgemäßen Vorrichtung besteht, darin, dass das Innere der Reaktoren mit Schamottmaterialien aufgekleidet ist.

Und auch eine vorteilhafte Ausgestaltung der erfindungsgemäßen Vorrichtung besteht darin, dass die schachtartige Zuführung aus hochtemperaturbeständiger Keramik oder Edelstahl bestehen.

Und auch vorteilhafterweise ist im oberen Teil des weiteren Reaktors eine Vorrichtung zur Staubabscheidung und zur Abführung des Staubes vorhanden.

Von Vorteil ist weiterhin, wenn die weitere Transporteinrichtung ein Schneckenförderer ist, wobei vorteilhafterweise ein Schneckenförderer mit einer geteilten Förderschnecke eingesetzt ist, wobei eine Förderschnecke den Transport der Pyrolyseprodukte bis zur Zuführung des weiteren Reaktors realisiert und eine weitere Förderschnecke den teilweisen Weitertransport von Pyrolyseprodukten realisiert. Noch vorteilhafterweise weist die weitere Förderschnecke im Bereich der Zuführung des weiteren Reaktors einen einzigen gegenläufigen Wendelgang und/oder am Anfang oder nach dem ersten Wendelgang einen scheibenförmigen Aufsatz auf, der aus Sicherheitsgründen einen geringfügig kleineren Durchmesser als der Innendurchmesser der Transporteinrichtung aufweist. Damit ist sicherheitshalber der Durchtritt von Material durch den Spalt zwischen scheibenförmigem Aufsatz und Innenwandung der Transporteinrichtung gewährleistet.

Bei dem erfindungsgemäßen Verfahren zur Energiegewinnung aus Bioenergieträgern und anderen organischen Stoffen in der erfindungsgemäßen Vorrichtung werden die Bioenergieträger und anderen organischen Stoffe über den Einlauf in den Pyrolysereaktor eingebracht und mit der Fördereinrichtung im Inneren transportiert, wobei im dem Einlauf räumlich nachfolgenden Teil des Pyrolysereaktors die Bioenergieträger und anderen organischen Stoffe zuerst getrocknet und anschließend durch die indirekte Beheizung des Pyrolysereaktors im wesentlichen pyrolysiert werden. Danach werden die gasförmigen und festen Pyrolyseprodukte sowie Reststoffe über die Öffnung im Pyrolysereaktor und die schachtartige Führung nach unten in eine weitere Transportvorrichtung geleitet und von der Transportvorrichtung bis unterhalb und mindestens teilweise in die Zuführung des weiteren Reaktors hinein transportiert und dort mit den eingeleiteten Gasen und/oder Gasgemischen und/oder Wasserdampf vermischt und verwirbelt und ganz oder teilweise verbrannt, vergast und gecrackt. Verbleibende Pyrolyseprodukte und/oder teilweise Reaktionsprodukte werden über die weitere Transportvorrichtung ausgetragen und teilweise mit der nach oben gerichteten Gasströmung im weiteren Reaktor in den oberen Teil transportiert und können nachfolgend außerhalb des weiteren Reaktors einer weiteren Umsetzung zugeführt werden, wobei die entstandenen gasförmigen Produkte einer Energiegewinnungsanlage zugeführt werden.

Vorteilhafterweise werden die Bioenergieträger und anderen organischen Stoffe in Form von feinem bis mittelstückigem Gut (Kantenlängen bis 50 mm) eingesetzt.

Auch vorteilhafterweise werden als Bioenergieträger und anderen organische Stoffe, Holz, Stroh, nachwachsende Rohstoffe und landwirtschaftliche Reststoffe eingesetzt.

Ebenfalls vorteilhafterweise wird die Pyrolyse der Bioenergieträger und anderen organischen Stoffe im letzten Drittel des Reaktors realisiert.

Und auch vorteilhafterweise wird der Energieeintrag zur Pyrolyse über die indirekte Beheizung teilweise durch die Verbrennung und Vergasung der Produkte in dem weiteren Reaktor realisiert.

Auch von Vorteil ist es, dass vorgewärmte Luft oder Wasserdampf in den weiteren Reaktor eingeleitet wird.

Ebenfalls von Vorteil ist es, dass das Gas und/oder das Gasgemisch und/oder der Wasserdampf unter einem Druck bis 3,0 MPa eingeleitet werden.

Auch vorteilhafterweise wird eine nach oben gerichtete Gas-, Gasgemisch- und/oder Wasserdampf-Strömung im weiteren Reaktor realisiert, die durch Absaugen der gasförmigen Reaktionsprodukte und des eingeleiteten Gases, Gasgemisches und/oder Wasserdampfes realisiert werden kann.

Weiterhin von Vorteil ist es, wenn durch die weitere Transportvorrichtung ein Anstauen der transportierten Pyrolyseprodukte unter der Zuführung in den weiteren Reaktor und bis mindestens in die Zuführung hinein realisiert wird.

Durch die Erfindung können organische Stoffe nahezu vollständig umgesetzt und vorteilhafterweise Kleinvergaser bis 800 kW Leistung realisiert werden.

Das erfindungsgemäße Verfahren beinhaltet die Trocknung und Pyrolyse der eingesetzten Bioenergieträger und anderen organischen Stoffe bei Temperaturen von 500 - 600 °C im Pyrolysereaktor und die Verbrennung, Vergasung und das Cracken der Pyrolyseprodukte und Reststoffe bei Temperaturen bis 1200 °C im weiteren Reaktor.

Die Trocknung der organischen Stoffe im Trocknungsbereich des Pyrolysereaktors erfolgt durch ein umlaufendes Trocknungsmittel, vorzugsweise ein Luft-Wasserdampf-Gemisch im Bereich von 200 °C.
Die so getrockneten und durch die Fördereinrichtung weitergeleiteten Bioenergieträger und anderen organischen Stoffe werden dann im Pyrolyseabschnitt des Pyrolysereaktors bei Temperaturen zwischen 500 - 600 °C in Kohlenmonoxid, Kohlendioxid, Wasserstoff, Wasserdampf, flüchtige, lang- und kurzkettige Kohlenwasserstoffe und Kohle und Pyrolysekoks im wesentlichen vollständig umgesetzt. Die vollständige Umsetzung kann durch die Fördergeschwindigkeit gesteuert werden. Dies kann in Abhängigkeit der konkret eingesetzten Bioenergieträger und anderen organischen Stoffe und den konkreten Abmessungen der Vorrichtung optimiert werden.
Die gasförmigen und festen Produkte der Pyrolysestufe und auch mögliche nicht pyrolysierte Stoffe werden dann durch die Öffnung im Pyrolysereaktor und durch die schachtartige Führung zu einer weiteren Transportvorrichtung geleitet. Bei stehender Anordnung des weiteren Reaktors und direkt nach unten gerichteter Führung fallen die Produkte in die weitere Transportvorrichtung. Die Produkte werden dann bis unter und mindestens teilweise in die Zuführung des weiteren Reaktors hinein transportiert. Gleichzeitig mit diesen Produkten wird von unten kommend eine Gasströmung nach oben in den weiteren Reaktor realisiert. Dazu wird Gas oder ein Gasgemisch und/oder Wasserdampf von unten in den weiteren Reaktor geleitet. Dies kann einerseits unter Druck erfolgen oder durch eine Absaugung im oberen Bereich des weiteren Reaktors realisiert werden. Dabei wird mindestens eine solche Strömungsgeschwindigkeit realisiert, die ein Ablagern der festen Bestandteile im verjüngten Teil des weiteren Reaktors verhindert. Dies kann auch durch eine entsprechende Anordnung von mehr als einem Eintritt für das Gas oder Gasgemisch und/oder Wasserdampf unterstützt werden.

Beim Aufeinandertreffen von Gas/Gasgemisch/Wasserdampf und den festen und gasförmigen Pyrolyseprodukten und möglicherweise Reststoffen, werden die festen Teile mit dem Gas/Gasgemisch/Wasserdampf-Strom mindestens teilweise mitgerissen. Die gasförmigen Bestandteile vermischen sich. Dieser beladene Gas/Gasgemisch/Wasserdampf-Strom zirkuliert dann im weiteren Reaktor und ein Teil wird nach oben ausgetragen. Im weiteren Reaktor findet im wesentlichen die vollständige Umsetzung der festen und gasförmigen Produkte bei Temperaturen bis 1300 °C statt. Bei Vorhandensein von Sauerstoff werden feste Bestandteile verbrannt, im wesentlichen findet jedoch eine Vergasung der festen Bestandteile statt. Die gasförmigen langen Kohlenwasserstoffen werden gecrackt. In Abhängigkeit von dem Durchsatz gelangen nach entsprechenden Zeiten die ganz oder im wesentlichen ganz umgesetzten Produkte in im wesentlichen gasförmigem Zustand in den oberen Teil des weiteren Reaktors, wo sie die indirekte Beheizung des Pyrolysereaktors mindestens in einem Teil des Pyrolyseabschnittes realisieren. Die möglicherweise noch nicht vollständig stattgefundene Umsetzung von festen Bestandteilen kann im oberen Teil noch realisiert werden.
Endprodukt dieses Verfahrens ist ein möglichst teerarmes Rohgas mit den Hauptenergieträgern Wasserstoff, Methan und Kohlenmonoxid.
Noch vorhandene feste Bestandteile werden einerseits über die weitere Transportvorrichtung aus dem Prozess ausgetragen oder können beispielsweise über eine Staubabscheidung ausgetragen werden.
Das entstandene Rohgas wird aus dem weiteren Reaktor abgeleitet oder abgesaugt und beispielsweise einer regenerativen Abkühlung und einer Reinigung unterzogen und dann einer Nachverbrennung und/oder motorischen Verbrennung zur Energiegewinnung zur Verfügung gestellt.
Die regenerative Abkühlung des Rohgases aus dem Prozess kann zur Erwärmung des in den Prozess eingeleiteten Gases oder Gasgemisches dienen.

Bezüglich der Vorrichtung hat sich als vorteilhaft erwiesen, den Pyrolysereaktor geneigt anzuordnen, wobei dabei im unteren Teil der Einlauf realisiert ist. Eine Förderschnecke ragt in den Pyrolysereaktor hinein und realisiert den Transport der Bioenergieträger und anderen organischen Stoffe über die gesamte Länge des Pyrolysereaktors. Dabei ist die Förderschnecke an die vorhandenen Temperaturen angepasst und bestimmt durch ihre Geschwindigkeit die Verweilzeit der Bioenergieträger und anderen organischen Stoffe im Pyrolysereaktor. Vorteilhafterweise ist die Förderschnecke oben in einem heißgehenden Lager verlagert, das einen Längenausgleich zulässt.

Im weiteren wird die Erfindung an einem Ausführungsbeispiel näher erläutert.

Als Pyrolysereaktor wird ein Schneckenförderer von 2,5 m Länge und 200 mm Durchmesser mit einer innenliegenden Förderwendel mit einer Steigung von 50 mm eingesetzt. Die Neigung des Schneckenförderers beträgt 35°. Der Schneckenförderer ist im unteren Bereich durch einen Stützbock gelagert und mit einem Antrieb versehen. Der Schneckenförderer führt durch den stehend angeordneten hohlzylinderförmigen weiteren Reaktor hindurch, so dass sich im wesentlichen das letzte Drittel des Schneckenförderers im Innenraum des weiteren Reaktors befindet. Der Durchtritt wird im wesentlichen im mittleren Bereich des weiteren Reaktors realisiert.
Der Schneckenförderer hat am tiefsten Punkt eine Einlassöffnung mit einem Einlasstrichter für die organischen Stoffe. Weiterhin ist im unteren Bereich die Außenwand des Schneckenförderers mit einer Öffnung versehen, durch die das Trockenmedium, ein Wasserdampf-Luft-Gemisch in den Förderraum gelangt. Im Bereich des Abschlusses des Trockenbereiches im Schneckenförderer, ca. nach 1 m tritt das Trockenmedium über eine Auslassöffnung wieder aus.

Der Schneckenförderer transportiert 40 kg/h an Holzschnitzeln mit einer durchschnittlichen Kantenlänge von 30 mm.

Am Ende der Pyrolysestrecke innerhalb des Schneckenförderers ist außerhalb des weiteren Reaktors eine Öffnung von 100 mm Durchmesser im nach unten zeigenden Teil des Schneckenfördergehäuses vorhanden, an das ein Rohr von 1 m Länge angebracht ist. Durch dieses Rohr gelangen die Pyrolyseprodukte nach unten und gelangen so in einen zweiten Schneckenförderer.
Der weitere Reaktor weist eine Höhe von 2,5 m auf und einen inneren Durchmesser von 600 mm. Der untere Teil des weiteren Reaktors ist kreiskegelstumpfförmige ausgeführt und weist im Bereich seines kleinsten Durchmessers von 100 mm die Zuführung mit der Einlassöffnung für ein Luft/Wasserdampf-Gemisch auf.

Sowohl die Förderschnecken als auch der weitere Reaktor sind im Inneren mit Schamotte ausgekleidet.

Der weitere Schneckenförderer transportiert die Pyrolyseprodukte bis unter die Zuführung. Durch eine geteilte Förderschnecke, die unter den Zuführung einen Freiraum aufweist und als ersten Wendelgang der abführenden Förderschnecke einen gegenläufigen Wendelgang aufweist, werden die Pyrolyseprodukte unter der Zuführung angestaut und in die Zuführung und den weiteren Reaktor hinein transportiert.

Beim Auftreffen der festen Pyrolyseprodukte Kohle und Koks auf den Luft/Wasserdampf-Strom, der mit einer Strömungsgeschwindigkeit von 15 m/s nach oben führt, werden die festen Bestandteile zerteilt, teilweise verbrannt, vergast und die gasförmigen Pyrolyseprodukte gecrackt. Der beladene Strom zirkuliert im weiteren Reaktor im unteren Bereich bei Temperaturen im Bereich von 1100 bis 1300 °C. Im oberen Teil des weiteren Reaktors kühlt das Gas ab und es werden Temperaturen zwischen 700 und 800 °C erreicht. Gleichzeitig wird indirekt der Schneckenförderer im Bereich der Pyrolyse erwärmt.

Verbleibende feste Reststoffe oder Pyrolyseprodukte können über die weitere Transportvorrichtung und gleichzeitig auch nach oben über einen Staubabscheider abgezogen werden.
Das im oberen Teil des weiteren Reaktors mit einem Ventilator abgesaugte Rohgas wird in einer Menge von 200 m³/h weiterverarbeitet. Dieses Rohgas hat eine Leistung von etwa 150 kW.
Die Weiterverarbeitung erfolgt über eine regenerative Abkühlung und Reinigung und anschließende Verbrennung in einem Motor.

## Patentansprüche

1. Vorrichtung zur Energiegewinnung aus Bioenergieträgern und anderen organischen Stoffen, bestehend aus einem Reaktor (Pyrolysereaktor), der indirekt beheizbar ausgebildet ist und an einem Ende einen Einlauf für die Bioenergieträger und anderen organischen Stoffe aufweist, und der Pyrolysereaktor mit einer Transporteinrichtung versehen ist, die im Inneren den Transport der Bioenergieträger und anderen organischen Stoffe im Wesentlichen über seine gesamte Länge realisiert, und der Pyrolysereaktor mindestens eine solche Länge aufweist, dass im Inneren vom Einlauf in Transportrichtung gesehen mindestens zuerst eine Trocknung und nachfolgend eine Pyrolyse der Bioenergieträger und anderen organischen Stoffe im Wesentlichen vollständig realisiert ist, und dass mindestens ein Teil des Pyrolysereaktors, in dem die Pyrolyse abläuft, sich gas- und stoffdicht im Inneren eines weiteren Reaktors befindet, der nach unten verjüngend ausgebildet ist und mindestens im Bereich seines kleinsten Querschnittes eine Zuführung für Feststoffe und Gase und/oder Gasgemische und/oder Wasserdampf aufweist, und der Pyrolysereaktor im Bereich der im wesentlichen abgeschlossenen Pyrolyse der Bioenergieträger und anderen organischen Stoffe eine Öffnung mit einer schachtartigen Führung nach unten aufweist, die den Transport der Pyrolyseprodukte in eine weitere Transporteinrichtung realisiert, wobei die weitere Transporteinrichtung den Transport der Pyrolyseprodukte zu der Zuführung des weiteren Reaktors realisiert und dort einen mindestens teilweisen Eintritt der Pyrolyseprodukte in den weiteren Reaktor realisiert, und wobei die Innenräume der Reaktoren, Transporteinrichtungen, Führungen und Einbauteile aus entsprechend den jeweils stattfindenden thermischen Prozessen erreichbaren Maximaltemperaturen ausgewählten temperaturbeständigen Materialien besteht, und wobei der weitere Reaktor mindestens eine im oberen Teil befindliche Auslassöffnung für im wesentlichen gasförmige Produkte aufweist, die mit Energiegewinnungsvorrichtungen verbunden ist.

2. Vorrichtung nach Anspruch 1, bei der der Pyrolysereaktor rohrförmig, mit rundem, ovalem, quadratischem oder rechteckigem Querschnitt ausgebildet ist.

3. Vorrichtung nach Anspruch 1, bei der der Pyrolysereaktor geneigt angeordnet ist.

4. Vorrichtung nach Anspruch 3, bei der die Neigung zwischen 10 und 40 ° beträgt.

5. Vorrichtung nach Anspruch 1, bei der der Pyrolysereaktor im Inneren ein Schneckenförderer enthält.

6. Vorrichtung nach Anspruch 1, bei der der weitere Reaktor mit einem zylinderförmigen, rechteckigen, quadratischen oder ovalen Querschnitt ausgebildet ist, wobei im Inneren ein Hohlraum vorliegt.

7. Vorrichtung nach Anspruch 1, bei der der weitere Reaktor als stehender hohlzylinderförmiger Reaktor ausgebildet ist.

8. Vorrichtung nach Anspruch 1, bei der der verjüngende Teil des weiteren Reaktors kreiskegelstumpfförmig oder pyramidenstumpfförmig ausgebildet ist.

9. Vorrichtung nach Anspruch 1, bei dem die Zuführung für Feststoffe und Gase und/oder Gasgemische und/oder Wasserdampf kreisförmig, oval, quadratisch oder rechteckig ausgebildet ist.

10. Vorrichtung nach Anspruch 1, bei der die schachtartige Zuführung rohrförmig, mit rundem, ovalem, quadratischem oder rechteckigem Querschnitt ausgebildet ist.

11. Vorrichtung nach Anspruch 1, bei der die Öffnung im Pyrolysereaktor klein ist gegenüber dem Durchmesser des Reaktors.

12. Vorrichtung nach Anspruch 1, bei der das Innere der Reaktoren mit Schamottmaterialien aufgekleidet ist.

13. Vorrichtung nach Anspruch 1, bei der die schachtartige Zuführung aus hochtemperaturbeständiger Keramik oder Edelstahl bestehen.

14. Vorrichtung nach Anspruch 1, bei dem im oberen Teil des weiteren Reaktors eine Vorrichtung zur Staubabscheidung und zur Abführung des Staubes vorhanden ist.

15. Vorrichtung nach Anspruch 1, bei dem die weitere Transporteinrichtung ein Schneckenförderer ist.

16. Vorrichtung nach Anspruch 15, bei dem ein Schneckenförderer mit einer geteilten Förderschnecke eingesetzt ist, wobei eine Förderschnecke den Transport der Pyrolyseprodukte bis zur Zuführung des weiteren Reaktors realisiert und eine weitere Förderschnecke den teilweisen Weitertransport von Pyrolyseprodukten realisiert.

17. Vorrichtung nach Anspruch 16, bei dem die weitere Förderschnecke im Bereich der Zuführung des weiteren Reaktors einen einzigen gegenläufigen Wendelgang und/oder am Anfang oder nach dem ersten Wendelgang einen scheibenförmigen Aufsatz aufweist, der aus Sicherheitsgründen einen geringfügig kleineren Durchmesser als der Innendurchmesser der Transporteinrichtung aufweist.

18. Verfahren zur Energiegewinnung aus Bioenergieträgern und anderen organischen Stoffen in einer Vorrichtung nach einem der Ansprüche 1 bis 17, bei dem die Bioenergieträger und anderen organischen Stoffe über den Einlauf in den Pyrolysereaktor eingebracht und mit der Fördereinrichtung im Inneren transportiert werden, wobei im dem Einlauf räumlich nachfolgenden Teil des Pyrolysereaktors die Bioenergieträger und anderen organischen Stoffe zuerst getrocknet und anschließend durch die indirekte Beheizung des Pyrolysereaktors im wesentlichen pyrolysiert werden, und die gasförmigen und festen Pyrolyseprodukte sowie Reststoffe über die Öffnung im Pyrolysereaktor und die schachtartige Führung nach unten in eine weitere Transportvorrichtung geleitet werden, die Transportvorrichtung die Pyrolyseprodukte bis unterhalb und mindestens teilweise in die Zuführung des weiteren Reaktors hinein transportiert werden und dort mit den eingeleiteten Gasen und/oder Gasgemischen und/oder Wasserdampf vermischt und verwirbelt und ganz oder teilweise verbrannt, vergast und gecrackt werden und die Pyrolyseprodukte und/oder Reaktionsprodukte teilweise über die weitere Transportvorrichtung ausgetragen und teilweise mit der nach oben gerichteten Gasströmung im weiteren Reaktor in den oberen Teil transportiert werden und nachfolgend außerhalb des weiteren Reaktors eine weitere Umsetzung durchgeführt werden kann, und die entstandenen gasförmigen Produkte einer Energiegewinnungsanlage zugeführt werden.

19. Verfahren nach Anspruch 18, bei dem die Bioenergieträger und anderen organischen Stoffe in Form von feinem bis mittelstückigem Gut (Kantenlängen bis 50 mm) eingesetzt werden.

20. Verfahren nach Anspruch 18, bei dem als Bioenergieträger und anderen organische Stoffe, Holz, Stroh, nachwachsende Rohstoffe und landwirtschaftliche Reststoffe eingesetzt werden.

21. Verfahren nach Anspruch 18, bei dem die Pyrolyse der Bioenergieträger und anderen organischen Stoffe im letzten Drittel des Reaktors realisiert wird.

22. Verfahren nach Anspruch 18, bei dem der Energieeintrag zur Pyrolyse über die indirekte Beheizung teilweise durch die Verbrennung und Vergasung der Produkte in dem weiteren Reaktor realisiert wird.

23. Verfahren nach Anspruch 18, bei dem vorgewärmte Luft in den weiteren Reaktor eingeleitet wird.

24. Verfahren nach Anspruch 18, bei dem Wasserdampf in den weiteren Reaktor eingeleitet wird.

25. Verfahren nach Anspruch 18, bei dem das Gas und/oder das Gasgemisch und/oder der Wasserdampf unter einem Druck bis 3,0 MPa eingeleitet werden.

26. Verfahren nach Anspruch 18, bei dem eine nach oben gerichtete Gas-, Gasgemisch- und/oder Wasserdampf-Strömung im weiteren Reaktor realisiert wird.

27. Verfahren nach Anspruch 26, bei dem die nach oben gerichtete Gas-, Gasgemisch- und/oder Wasserdampf-Strömung durch Absaugen der gasförmigen Reaktionsprodukte und des eingeleiteten Gases, Gasgemisches und/oder Wasserdampfes realisiert wird.

28. Verfahren nach Anspruch 18, bei dem durch die weitere Transportvorrichtung ein Anstauen der transportierten Pyrolyseprodukte unter der Zuführung in den weiteren Reaktor und bis mindestens in die Zuführung hinein realisiert wird.

## Claims

1. Apparatus for obtaining energy from bioenergy carriers and other organic materials, consisting of a reactor (pyrolysis reactor) which is indirectly heatable and at one end has an inlet for the bioenergy carriers and other organic materials, and the pyrolysis reactor is provided with a transport device which in the interior effects transport of the bioenergy carriers and other organic materials essentially over its entire length, and the pyrolysis reactor has at least such a length that in the interior viewed from the inlet in the transport direction at least firstly drying and subsequently pyrolysis of the bioenergy carriers and other organic materials is effected essentially completely and that at least part of the pyrolysis reactor in which the pyrolysis proceeds is located in a gastight and material-tight manner in the interior of a further reactor which tapers in a downwards direction and at least in the region of its smallest cross section has a feed conduit for solids and gases and/or gas mixtures and/or gas steam and the pyrolysis reactor has, in the region of the essentially concluded pyrolysis of the bioenergy carriers and other organic materials, an opening having a shaft-like conduit in the downward direction which effects transport of the pyrolysis products into a further transport device, where the further transport device effects transport of the pyrolysis products to the feed conduit of the further reactor and there effects at least partial entry of the pyrolysis products into the further reactor, the interior spaces of the reactors, transport devices, feed conduits and internals consist of heat-resistant materials which are selected according to the maximum temperatures attainable in thermal processes taking place in each case and the further reactor has at least one outlet opening for essentially gaseous products which is located in the upper part and is connected to apparatuses for obtaining energy.

2. Apparatus according to Claim 1, wherein the pyrolysis reactor is tubular with a round, oval, square or rectangular cross section.

3. Apparatus according to Claim 1, wherein the pyrolysis reactor is inclined.

4. Apparatus according to Claim 3, wherein the inclination is in the range from 10 to 40°.

5. Apparatus according to Claim 1, wherein the pyrolysis reactor contains a screw conveyor in the interior.

6. Apparatus according to Claim 1, wherein the further reactor has a cylindrical, rectangular, square or oval cross section, with a hollow space being present in the interior.

7. Apparatus according to Claim 1, wherein the further reactor is configured as upright hollow-cylindrical reactor.

8. Apparatus according to Claim 1, wherein the tapering part of the further reactor has the shape of a frustum of a cone or frustum of a pyramid.

9. Apparatus according to Claim 1, wherein the feed conduit for solids and gases and/or gas mixtures and/or steam is circular, oval, square or rectangular.

10. Apparatus according to Claim 1, wherein the shaft-like feed conduit is tubular with a round, oval, square or rectangular cross section.

11. Apparatus according to Claim 1, wherein the opening in the pyrolysis reactor is small compared to the diameter of the reactor.

12. Apparatus according to Claim 1, wherein the interior of the reactors is lined with chamotte materials.

13. Apparatus according to Claim 1, wherein the shaft-like feed conduit consists of high-temperature-resistant ceramic or stainless steel.

14. Apparatus according to Claim 1, wherein an apparatus for dust precipitation and for discharge of the dust is present in the upper part of the further reactor.

15. Apparatus according to Claim 1, wherein the further transport device is a screw conveyor.

16. Apparatus according to Claim 15, wherein a screw conveyor having a divided transport screw is used and one transport screw effects transport of the pyrolysis products up to the feed conduit of the further reactor and a further transport screw effects partial further transport of pyrolysis products.

17. Apparatus according to Claim 16, wherein the further transport screw has, in the region of the feed conduit of the further reactor, a single opposite helical flight and/or at the beginning or after the first helical flight has a disc-shaped attachment which for safety reasons has a slightly smaller diameter than the interior diameter of the transport device.

18. Method for obtaining energy from bioenergy carriers and other organic materials in an apparatus according to any of Claims 1 to 17; wherein the bioenergy carriers and other organic materials are introduced via the inlet into the pyrolysis reactor and are transported in the interior by means of the transport device, where, in the part of the pyrolysis reactor spatially following the inlet, the bioenergy carriers and other organic materials are firstly dried and subsequently substantially pyrolysed by the indirect heating of the pyrolysis reactor and the gaseous and solid pyrolysis products and also residues are conveyed via the opening in the pyrolysis reactor and the shaft-like conduit downwards into a further transport apparatus, the pyrolysis products are transported by the transport apparatus to below and at least partly into the feed conduit of the further reactor and are there mixed with the introduced gases and/or gas mixtures and/or steam and fluidised and completely or partially burnt, gasified and cracked and the pyrolysis products and/or reaction products are partly discharged via the further transport apparatus and partly transported by means of the upwards-directed gas flow into the further reactor in the upper part and a further reaction can subsequently be carried out outside the further reactor and the gaseous products formed are fed to a plant for obtaining energy.

19. Method according to Claim 18, wherein the bioenergy carriers and other organic materials are used in the form of fine to medium-sized material (edge lengths up to 50 mm).

20. Method according to Claim 18, wherein wood, straw, renewable raw materials and agricultural residues are used as bioenergy carriers and other organic materials.

21. Method according to Claim 18, wherein the pyrolysis of the bioenergy carriers and other organic materials is effected in the last third of the reactor.

22. Method according to Claim 18, wherein the energy input for pyrolysis by indirect heating is partly effected by the combustion and gasification of the products in the further reactor.

23. Method according to Claim 18, wherein preheated air is introduced into the further reactor.

24. Method according to Claim 18, wherein steam is introduced into the further reactor.

25. Method according to Claim 18, wherein the gas and/or the gas mixture and/or the steam are/is introduced under a pressure of up to 3.0 MPa.

26. Method according to Claim 18, wherein an upwards-directed flow of gas, gas mixture and/or steam is realized in the further reactor.

27. Method according to Claim 26, wherein the upwards-directed flow of gas, gas mixture and/or steam is effected by extraction of the gaseous reaction products and the introduced gas, gas mixture and/or steam.

28. Method according to Claim 18, wherein banking-up of the transported pyrolysis products under the feed conduit into the further reactor and up to at least into the feed conduit is effected by means of the further transport apparatus.

## Revendications

1. Dispositif pour obtenir de l'énergie à partir de porteurs de bioénergie et d'autres matières organiques, se composant d'un réacteur (réacteur de pyrolyse), qui peut être chauffé de manière indirecte, et qui présente à une extrémité une entrée pour les porteurs de bioénergie et les autres matières organiques, et le réacteur de pyrolyse est doté d'un dispositif de transport, qui réalise à l'intérieur le transport des porteurs de bioénergie et des autres matières organiques essentiellement sur toute sa longueur, et le réacteur de pyrolyse présente au moins une longueur telle que, vu à partir de l'entrée dans la direction de transport, il se produise essentiellement de façon complète à l'intérieur au moins d'abord un séchage et ensuite une pyrolyse des porteurs de bioénergie et des autres matières organiques, et qu'au moins une partie du réacteur de pyrolyse, dans laquelle la pyrolyse se produit, se trouve de façon étanche au gaz et aux matières à l'intérieur d'un autre réacteur, qui est de forme décroissante vers le bas et qui présente au moins dans la région de sa plus petite section transversale une alimentation pour des matières solides et des gaz ou des mélanges de gaz et/ou de la vapeur d'eau, et le réacteur de pyrolyse présente dans la région de la pyrolyse essentiellement terminée des porteurs de bioénergie et des autres matières organiques une ouverture avec un guidage en forme de puits vers le bas, qui assure le transport des produits de pyrolyse dans un autre dispositif de transport, dans lequel l'autre dispositif de transport assure le transport des produits de pyrolyse vers l'alimentation de l'autre réacteur et y réalise une introduction au moins partielle des produits de pyrolyse dans l'autre réacteur, dans lequel les espaces intérieurs des réacteurs, des dispositifs de transport, des guidages et des parties de montage se composent de matériaux résistants à la température sélectionnés en correspondance avec les températures maximales pouvant être atteintes selon les processus thermiques respectivement mis en oeuvre, et dans lequel l'autre réacteur présente au moins une ouverture de sortie se trouvant dans la partie supérieure pour des produits essentiellement gazeux, qui est raccordée à des dispositifs pour obtenir de l'énergie.

2. Dispositif selon la revendication 1, dans lequel le réacteur de pyrolyse est de forme tubulaire, avec une section transversale ronde, ovale, carrée ou rectangulaire.

3. Dispositif selon la revendication 1, dans lequel le réacteur de pyrolyse est disposé de façon inclinée.

4. Dispositif selon la revendication 3, dans lequel l'inclinaison vaut entre 10° et 40°.

5. Dispositif selon la revendication 1, dans lequel le réacteur de pyrolyse contient à l'intérieur un transporteur à vis.

6. Dispositif selon la revendication 1, dans lequel l'autre réacteur est réalisé avec une section transversale cylindrique, rectangulaire, carrée ou ovale, dans lequel il y a à l'intérieur un espace creux.

7. Dispositif selon la revendication 1, dans lequel l'autre réacteur est constitué par un réacteur cylindrique creux dressé.

8. Dispositif selon la revendication 1, dans lequel la partie décroissante de l'autre réacteur est réalisée en forme de tronc de cône ou en forme de tronc de pyramide.

9. Dispositif selon la revendication 1, dans lequel l'alimentation destinée aux matières solides et aux gaz et/ou aux mélanges de gaz et/ou à la vapeur d'eau est réalisée sous forme circulaire, ovale, carrée ou rectangulaire.

10. Dispositif selon la revendication 1, dans lequel l'alimentation en forme de puits est réalisée sous forme tubulaire, avec une section transversale ronde, ovale, carrée ou rectangulaire.

11. Dispositif selon la revendication 1, dans lequel l'ouverture dans le réacteur de pyrolyse est petite par rapport au diamètre du réacteur.

12. Dispositif selon la revendication 1, dans lequel l'intérieur des réacteurs est revêtu de matériaux de chamotte.

13. Dispositif selon la revendication 1, dans lequel l'alimentation en forme de puits se compose de céramique ou d'acier allié.

14. Dispositif selon la revendication 1, dans lequel il se trouve dans la partie supérieure de l'autre réacteur un dispositif de dépoussiérage et d'évacuation des poussières.

15. Dispositif selon la revendication 1, dans lequel l'autre dispositif de transport est un transporteur à vis.

16. Dispositif selon la revendication 15, dans lequel on utilise un transporteur à vis avec une vis transporteuse divisée, dans lequel une vis transporteuse assure le transport des produits de pyrolyse jusqu'à l'alimentation de l'autre réacteur et une autre vis transporteuse assure le transport partiel ultérieur de produits de pyrolyse.

17. Dispositif selon la revendication 16, dans lequel l'autre vis transporteuse présente dans la région de l'alimentation de l'autre réacteur un seul pas hélicoïdal à contresens et/ou au commencement ou après le premier pas hélicoïdal un élément en forme de disque, qui pour des raisons de sécurité présente un diamètre légèrement plus petit que le diamètre intérieur du dispositif de transport.

18. Procédé pour obtenir de l'énergie à partir de porteurs de bioénergie et d'autres matières organiques dans un dispositif selon l'une quelconque des revendications 1 à 17, dans lequel on introduit les porteurs de bioénergie et les autres matières organiques par l'entrée dans le réacteur de pyrolyse et on les transporte à l'intérieur avec le dispositif de transport, dans lequel dans la partie du réacteur de pyrolyse faisant suite spatialement à l'entrée on sèche d'abord les porteurs de bioénergie et les autres matières organiques et ensuite on les pyrolyse essentiellement par le chauffage indirect du réacteur de pyrolyse, et on conduit les produits de pyrolyse gazeux et solides ainsi que les matières résiduelles par l'ouverture dans le réacteur de pyrolyse et le guidage en forme de puits vers le bas dans un autre dispositif de transport, le dispositif de transport transporte les produits de pyrolyse jusqu'en dessous et au moins en partie dans l'alimentation de l'autre réacteur et ici on les mélange et on les agite et on les brûle, on les gazéifie et on les craque totalement ou partiellement avec les gaz et/ou les mélanges de gaz et/ou la vapeur d'eau introduits et on extrait les produits de pyrolyse et/ou les produits de réaction en partie par l'autre dispositif de transport et on les transporte en partie avec le courant gazeux dirigé vers le haut dans l'autre réacteur dans la partie supérieure et ensuite une autre conversion peut être effectuée à l'extérieur de l'autre réacteur, et on envoie les produits gazeux formés à une installation pour obtenir de l'énergie.

19. Procédé selon la revendication 18, dans lequel on utilise les porteurs de bioénergie et les autres matières organiques sous la forme de matières fragmentées fines à moyennes (longueur des arêtes jusque 50 mm).

20. Procédé selon la revendication 18, dans lequel on utilise comme porteurs de bioénergie et autres matières organiques du bois, de la paille, des matières premières renouvelables et des matières résiduelles agricoles.

21. Procédé selon la revendication 18, dans lequel on réalise la pyrolyse des porteurs de bioénergie et des autres matières organiques dans le dernier tiers du réacteur.

22. Procédé selon la revendication 18, dans lequel on réalise l'apport d'énergie pour la pyrolyse par le chauffage indirect en partie par la combustion et la gazéification des produits dans l'autre réacteur.

23. Procédé selon la revendication 18, dans lequel on introduit de l'air préchauffé dans l'autre réacteur.

24. Procédé selon la revendication 18, dans lequel on introduit de la vapeur d'eau dans l'autre réacteur.

25. Procédé selon la revendication 18, dans lequel on introduit le gaz et/ou le mélange de gaz et/ou la vapeur d'eau sous une pression pouvant atteindre 3,0 MPa.

26. Procédé selon la revendication 18, dans lequel on réalise un courant de gaz, de mélange de gaz et/ou de vapeur d'eau dirigé vers le haut dans l'autre réacteur.

27. Procédé selon la revendication 26, dans lequel on réalise le courant de gaz, de mélange de gaz et/ou de vapeur d'eau dirigé vers le haut par aspiration des produits de réaction gazeux et du gaz, du mélange de gaz et/ou de la vapeur d'eau introduit(e).

28. Procédé selon la revendication 18, dans lequel on réalise par l'autre dispositif de transport une accumulation des produits de pyrolyse transportés sous l'alimentation dans l'autre réacteur et jusqu'au moins dans l'alimentation.
